# FASCICULE DE BREVET EUROPEEN

(11) **EP 0 987 723 B1**
(45) Date de publication et mention de la délivrance du brevet: **14.04.2004**
(21) Numéro de dépôt: 99402254.9
(22) Date de dépôt: 15.09.1999
(51) Int. Cl.: H01F 36/00, H01F 6/02

(54) **Transformateur de courant électrique à bobinages supraconducteurs**
Elektrischer Transformator mit supraleitenden Wicklungen
Electrical transformer with superconducting windings

(30) Priorité: 18.09.1998 FR 9811677
(43) Date de publication de la demande: 22.03.2000
(73) Titulaire: ALSTOM Holdings, 75116 Paris (FR)
(72) Inventeur: Verhaege, Thierry, 91 160 Saulx les Chartreux (FR); Cottevieille, Christian, 93 100 Montreuil sous Bois (FR)
(74) Mandataire: Poulin, Gérard

(56) Documents cités:
- EP-A- 0 018 854
- EP-A- 0 154 779
- DE-A- 4 418 050
- GB-A- 2 321 137
- F.VAN OVERBEEKE ET AL.: "design and operation of a protection system for transformers with superconducting windings" CRYOGENICS., vol. 25, no. 12, décembre 1985 (1985-12), pages 687-694, XP002104440 GUILDFORD GB

## Description

L'invention se rapporte à un transformateur de courant électrique comprenant au primaire et/ou au secondaire, des bobinages supraconducteurs.

D'une manière connue, on utilise des conducteurs supraconducteurs à matrice métallique pour réaliser des transformateurs électriques de forte puissance massique et de rendement élevé. En effet, les conducteurs supraconducteurs à matrice métallique permettent d'obtenir des densités de courant bien plus élevées et des pertes bien moins élevées que les supraconducteurs massifs ou les conducteurs non supraconducteurs.

Toutefois, la faible résistance électrique de la matrice métallique (par exemple en argent ou en alliage d'argent) ne permet pas de limiter efficacement les courants de court-circuit et il est nécessaire de définir le transformateur, ainsi que les autres appareillages électriques présents sur la ligne, de façon qu'ils puissent supporter des courants de court-circuit élevés, à moins d'ajouter en série un dispositif dédié à la limitation de courant. Un tel dispositif peut de manière connue, être réalisé à partir de supraconducteurs massifs qui présentent une forte résistance électrique lorsque le courant dépasse leurs capacités normales.

Le but de l'invention est de combiner en un seul appareil et dans les meilleurs conditions d'encombrement notamment, les fonctions de transformateur et de limiteur de courant.

L'idée à la base de l'invention est d'utiliser la quantité de supraconducteur massif juste nécessaire pour la limitation du courant et de la faire participer à la créations des ampères-tours, en prenant soin de la localiser dans les régions du transformateur où le champ magnétique est le plus faible, cette dernière disposition permettant de réduire considérablement les pertes du supraconducteur massif.

Plus particulièrement, l'objet de l'invention est un transformateur de courant électrique comprenant un primaire et un secondaire constitués chacun d'au moins une première bobine formée par l'enroulement d'un ou plusieurs conducteurs supraconducteurs à matrice métallique, caractérisé en ce que ladite première bobine du primaire ou du secondaire est disposée de façon coaxiale à au moins une seconde bobine avec laquelle elle est reliée en série, cette seconde bobine étant formée par un tube supraconducteur massif qui a une fonction de limiteur de courant et est en contact électrique et mécanique avec un tube en alliage métallique fortement résistif, les deux tubes étant coaxiaux et usinés en forme de solénoïde.

Dans l'agencement du transformateur selon l'invention, le volume du tube ou des tubes supraconducteurs usinés est réduit au minimum nécessaire pour limiter efficacement les courants de court-circuit, alors que les conducteurs supraconducteurs à matrice métallique sont utilisés pour le reste des bobinages.

Selon un premier avantage de l'invention, le ou les tubes supraconducteurs usinés peuvent être placés au primaire dans le cas d'un transformateur élévateur de tension, ou au secondaire dans le cas d'un transformateur abaisseur de tension. Ils opèrent ainsi sous courant fort et basse tension, soit forte section et faible nombre de spires, ce qui convient le mieux à ce type de bobinage, tout en réduisant les problèmes diélectriques lors de la limitation du courant.

Selon un second avantage de l'invention, le tube en alliage fortement résistif procure un renforcement mécanique du tube supraconducteur, favorise la propagation de la transition et réduit l'échauffement du tube, lors des limitations de courant.

Selon un mode de réalisation particulier du transformateur selon l'invention, le ou les tubes supraconducteurs usinés sont localisés dans les régions du transformateur où le champ magnétique est le plus faible, ce qui a pour conséquences utiles une réduction considérable de leurs pertes, et une augmentation de la densité de courant qu'ils supportent.

D'autres caractéristiques et avantages de l'invention apparaîtront à la lecture de la description de deux modes de réalisation illustrés par les dessins.
La figure 1 montre en demi coupe axiale selon l'axe D, un transformateur selon l'invention, qui comprend un bobinage primaire haute tension à base de conducteurs supraconducteurs à matrice métallique, et au secondaire, une bobine à base de conducteurs supraconducteurs à matrice métallique, en série avec l'assemblage usiné d'un tube supraconducteur et d'un tube d'alliage métallique.
La figure 2 montre en coupe longitudinale le détail de l'assemblage usiné du tube supraconducteur et du tube d'alliage métallique.
La figure 3 montre en demi coupe axiale selon l'axe D, un autre exemple de transformateur selon l'invention.

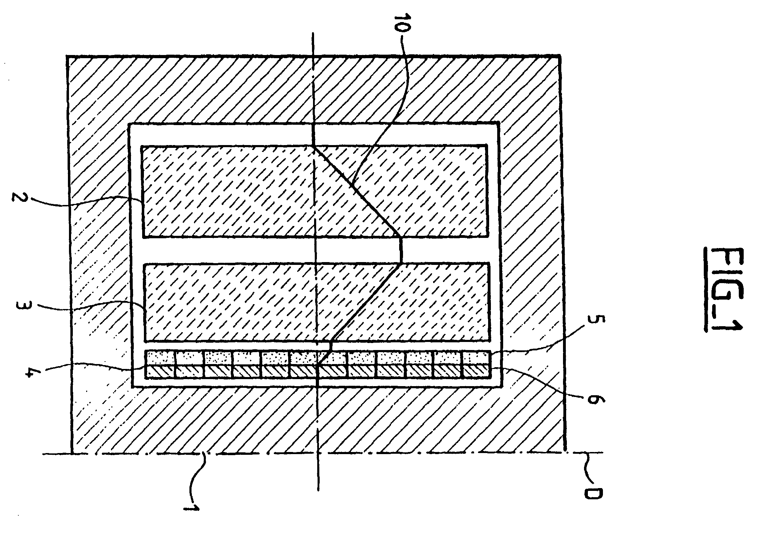

Un transformateur selon l'invention comprend en particulier, figure 1, un circuit magnétique 1, une bobine primaire 2 et deux bobines secondaires 3 et 4 en série. Les bobines 2, 3 et 4 sont coaxiales, la bobine 3 étant interposée entre les bobines 2 et 4.

Les bobines 2 et 3 sont réalisées en solénoïdes multicouches, à partir d'enroulements d'un ou plusieurs conducteurs supraconducteurs à matrice métallique; à titre d'exemple, il peut s'agir de rubans d'argent, contenant une pluralité de filaments de céramique supraconductrice Bi₂Sr₂CaCu₂O₇. Ces rubans acceptent des densités de courant de l'ordre de 30 A/mm², relativement élevées par comparaison avec 5 à 10 A/mm² pour les tubes massifs de Bi₂Sr₂CaCu₂O₇. Ils ont une épaisseur très faible (typiquement 0.2 mm), ce qui permet de réduire fortement leurs pertes, par rapport aux tubes massifs, qui ont une épaisseur de plusieurs millimètres.

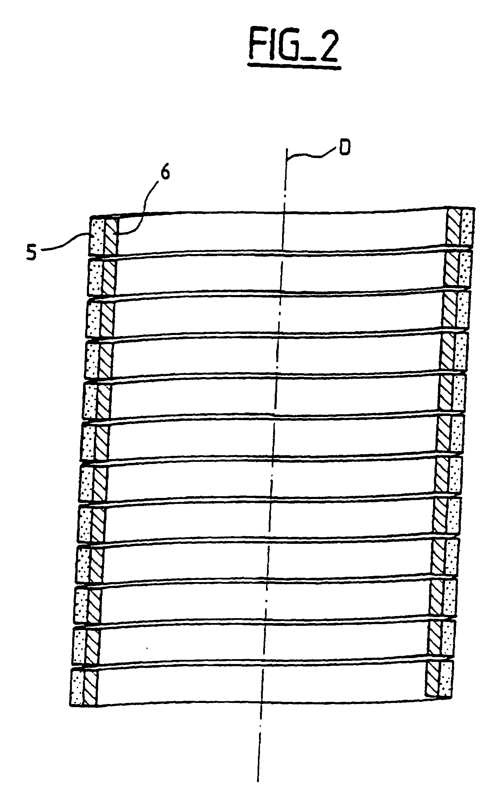

La bobine 4 est réalisée à partir d'un tube 5 massif de Bi₂Sr₂CaCu₂O₇, et d'un tube 6 d'un alliage métallique (par exemple en un acier inox, cupro-nickel ou inconel), usinés ensembles en forme de solénoïde comme visible sur la figure 2. Le tube 5 est par exemple serti autour du tube 6 par dilatation ou par contraction de l'un ou de l'autre pour assurer un contact électrique et mécanique, spire contre spire après usinage de sorte que, quand le tube 5 se comporte en limiteur de courant, le courant passe en partie dans le tube 6. Le Bi₂Sr₂CaCu₂O₇ massif présente, lorsqu'il perd l'état supraconducteur, une forte résistivité électrique (de l'ordre de 10⁻⁵ Ω.m), qui le prédispose à la fonction de limitation du courant. Cette limitation peut être obtenue dès lors qu'une fraction suffisante des bobinages (typiquement 10%) est faite à partir de Bi₂Sr₂CaCu₂O₇ massif. La présence en parallèle au tube 5, d'un tube d'alliage métallique 6 coaxial et en contact électrique et mécanique avec celui-ci, permet d'éviter la dégradation du supraconducteur par surchauffe, lors d'une perte localisée de l'état supraconducteur, en réduisant l'effet Joule, en accroissant l'inertie thermique et en favorisant la propagation de la transition.

Etant donné que la limitation du courant ne demande qu'une petite fraction de supraconducteur massif, il est possible selon un premier avantage de l'invention, de placer les tubes supraconducteurs usinés au primaire dans le cas d'un transformateur élévateur de tension, ou au secondaire dans le cas d'un transformateur abaisseur de tension comme c'est le cas du transformateur montré sur la figure 1. Ils opèrent ainsi sous courant fort et basse tension, soit forte section et faible nombre de spires; ce qui convient le mieux pour ce type de bobinage, tout en réduisant les problèmes diélectriques lors de la limitation du courant.

Les tubes supraconducteurs usinés sont de préférences localisés dans les régions du transformateur où le champ magnétique est le plus faible, ce qui a pour avantages l'obtention d'une réduction considérable de leurs pertes, et d'une augmentation notable de la densité de courant qu'ils acceptent. Le profil de champ magnétique au sein des bobinages est connu de l'homme de l'art; il est représenté par la ligne 10 sur la figure 1, en unités arbitraires. Le champ magnétique est maximal entre les bobines 2 et 3 et pratiquement nul aux limites externe et interne de la zone bobinée. Par sa position extrême, le tube supraconducteur usiné 5 est ici exposé à un champ magnétique très faible, et présente donc de faibles pertes.

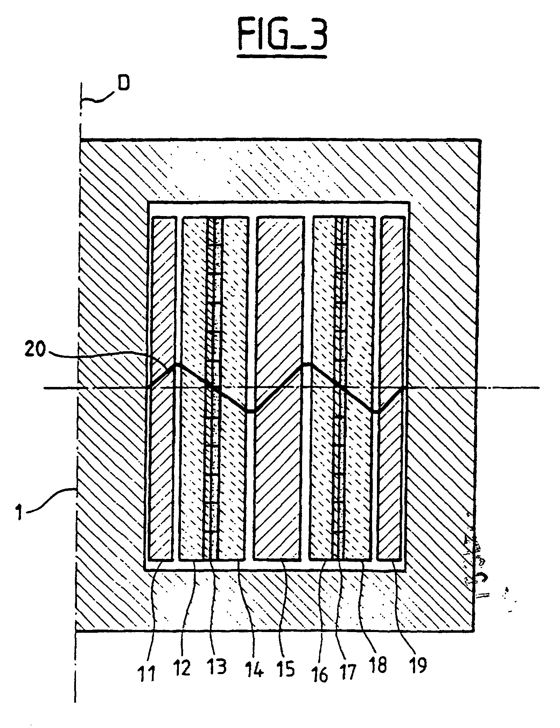

L'invention n'est évidemment pas limitée à la géométrie illustrée à titre d'exemple sur la figure 1. De façon générale, l'homme de l'art n'aura pas de difficulté à établir les régions où le champ magnétique s'annule dans le transformateur, pour y localiser les tubes supraconducteurs usinés. L'une des variantes possibles du transformateur selon l'invention est illustrée sur la figure 3.

La figure 3 montre un transformateur abaisseur de courant qui comprend successivement, de l'intérieur vers l'extérieur de son axe D, neuf bobines coaxiales référencées 11 à 19. Les bobines 11, 15, et 19 font partie du primaire, les bobines 12 à 14, 16 à 18 font partie du secondaire. Les bobines 12 à 14 sont reliées en série, ainsi que les bobines 16 à 18. Les bobines 13 et 17 sont des tubes supraconducteurs usinés en forme de solénoïde, doublés par des tubes en alliage métallique usinés également en forme de solénoïde ; les autres bobines sont constituées de conducteurs supraconducteurs à matrice métallique. Le profil du champ magnétique est représenté par la ligne 20 en unités arbitraires; il s'annule à mi-épaisseur des deux tubes supraconducteurs usinés 13 et 17, qui ont donc de très faibles pertes.

L'agencement de transformateur selon l'invention apporte donc de nombreux avantages, par rapport à la simple juxtaposition d'un transformateur avec des bobinages supraconducteurs et d'un limiteur de courant. En effet, la protection du transformateur contre les courants de court-circuit au moyen de tubes supraconducteurs massifs usinés participant à la production des ampères-tours apporte une forte réduction de coût, par rapport à un transformateur associé extérieurement à un limiteur de courant Réciproquement, la structure propre du transformateur selon l'invention permet la mise en place de tubes supraconducteurs massifs usinés nécessaires à la limitation du courant, dans des régions de faible champ magnétique, où ceux-ci présentent leurs meilleurs performances. Enfin, les pertes actives et réactives sont réduites, ainsi que les besoins cryogéniques.

## Revendications

1. Un transformateur de courant électrique comprenant un primaire et un secondaire constitués chacun d'au moins une première bobine (2, 3, 11, 12, 14-16, 18, 19) formée par l'enroulement d'un ou plusieurs conducteurs supraconducteurs à matrice métallique, **caractérisé en ce que** ladite première bobine du primaire ou du secondaire est disposée de façon coaxiale à au moins une seconde bobine avec laquelle elle est reliée en série, cette seconde bobine étant formée par un tube supraconducteur massif (5, 13, 17) qui a une fonction de limiteur de courant et est en contact électrique et mécanique avec un tube en alliage métallique fortement résistif (6), les deux tubes étant coaxiaux et usinés en forme de solénoïde.

2. Le transformateur selon la revendication 1, dans lequel la seconde bobine (5, 13, 17) est disposée dans une région du transformateur où le champ magnétique est le plus faible.

3. Le transformateur selon l'une des revendications 1 ou 2, dans lequel au moins une seconde bobine (13, 17) est disposée entre deux premières bobines (12, 14 ; 16, 18) du primaire ou du secondaire du transformateur et est reliée en série avec ces deux premières bobines.

## Claims

1. An electric transformer comprising a primary and a secondary, each constituted by at least a first coil (2, 3, 11, 12, 14-16, 18, 19) formed by winding one or more metal-matrix superconductive conductors, **characterized in that** the first coil of the primary or of the secondary is arranged coaxially to at least one second coil with which it is connected in series, said second coil being formed by a solid superconductive tube (5, 13, 17) having a current limiting function and is in electrical and mechanical contact with a highly resistive, metal alloy tube (6), the two tubes being coaxial and machined in solenoid form.

2. The transformer of claim 1, in which the second coil is disposed in a region of the transformer where the magnetic field is weakest.

3. The transformer according to one of the claims 1 or 2, in which at least one second coil (13, 17) is placed between two first coils (12, 14, 16, 18) of the transformer primary or secondary and is connected in series with said two first coils.

## Patentansprüche

1. Elektrischer Stromtransformator mit einer Primärwicklung und einer Sekundärwicklung, die jeweils aus mindestens einer ersten Spule (2,3,11,12,14-16,18,19), welche durch die Wicklung eines oder mehrerer Supraleiter mit metallischer Matrix gebildet ist, bestehen,
**dadurch gekennzeichnet, dass** die erste Spule der Primärwicklung oder der Sekundärwicklung koaxial zu mindestens einer zweiten Spule, mit der sie in Reihe geschaltet ist, angeordnet ist, wobei diese zweite Spule durch ein massives Supraleiterrohr (5,13,17) gebildet ist, das eine Funktion eines Strombegrenzers aufweist und in elektrischem und mechanischem Kontakt mit einem Rohr aus stark resistiver Metallegierung (6) steht, wobei die beiden Rohre koaxial und in Solenoidform gefertigt sind.

2. Transformator nach Anspruch 1, wobei die zweite Spule (5,13,17) in einem Bereich des Transformators angeordnet ist, in dem das Magnetfeld am schwächsten ist.

3. Transformator nach einem der Ansprüche 1 oder 2, wobei mindestens eine zweite Spule (13,17) zwischen zwei ersten Spulen (12,14;16,18) der Primärwicklung oder der Sekundärwicklung des Transformators angeordnet und in Reihe mit diesen beiden ersten Spulen geschaltet ist.
